# EUROPÄISCHE PATENTSCHRIFT

(11) **EP 0 834 659 B1**
(45) Veröffentlichungstag und Bekanntmachung des Hinweises auf die Patenterteilung: **09.05.2001**
(21) Anmeldenummer: 97114718.6
(22) Anmeldetag: 26.08.1997
(51) Int. Cl.: F16B 13/12

(54) **Spreizdübel**
Expansion dowel
Cheville d'expansion

(30) Priorität: 01.10.1996 DE 19640581
(43) Veröffentlichungstag der Anmeldung: 08.04.1998
(73) Patentinhaber: fischerwerke Artur Fischer GmbH & Co. KG, D-72178 Waldachtal (DE)
(72) Erfinder: Nehl, Wolfgang, 72178 Waldachtal (DE)

(56) Entgegenhaltungen:
- DE-A- 3 329 502

## Beschreibung

Die Erfindung betrifft einen Spreizdübel gemäß dem Oberbegriff des Anspruchs 1.

Derartige Spreizdübel sind üblicherweise durch Spritzgießen aus Kunststoff hergestellt. Sie weisen einen rohrförmigen Einführabschnitt für eine Schraube auf, von dem aus sich Spreizzungen zu einem vorderen Ende des Spreizdübels erstrecken. Der Spreizdübel wird in ein Bohrloch in einem Mauerwerk eingesetzt und durch Eindrehen der Schraube zwischen seine Spreizzungen werden diese radial auseinandergespreizt, so daß die Spreizzungen gegen eine Bohrlochwand gedrückt werden und der Spreizdübel mit der Schraube im Mauerwerk verankert ist.

Aus der DE-A-33 29 502 ist ein Spreizdübel bekannt, bei dem in einem Spreizbereich durch einen Längsschlitz in einer Axialebene des Spreizdübels zwei im Querschnitt halbkreisförmige Spreizzungen gebildet sind. Die beiden Spreizzungen sind parallel zur Schlitzebene in einander entgegengesetzte Richtungen gebogen ausgebildet. Dem Längsschlitz zugewandt weisen die Spreizzungen im Querschnitt halbkreisförmige Nuten auf, die bei unverformtem Spreizdübel einander gegenüberliegen. Beim Einbringen des Spreizdübels in ein Bohrloch werden die beiden Spreizzungen parallel zur Schlitzebene so verschoben, daß sich ihre halbkreisförmigen Querschnitte ohne Versatz gegenüberliegen. Zugleich verschieben sich die Nuten in den Spreizzungen gegeneinander. Durch Einbringen eines stabförmigen Spreizelements werden die Nuten der Spreizzungen wieder von einer Linie zueinander ausgerichtet und dadurch die Spreizzungen parallel zur Schlitzebene gegeneinander verschoben, so daß der Spreizdübel im Bohrloch verankert ist. Der bekannte Spreizdübel hat den Nachteil, daß seine Spreizzungen nur über einen kurzen, an den sie trennenden Längsschlitz anschließenden Umfangsabschnitt an einer Bohrlochwandung anliegen, die Anlagefläche des vorbekannten Spreizdübels ist auf einen kleinen Teil seines Umfangs begrenzt.

Der Erfindung liegt die Aufgabe zugrunde, einen Spreizdübel der eingangs genannten Art so weiterzubilden, daß seine Verankerungskraft im Bohrloch vergrößert ist.

Diese Aufgabe wird erfindungsgemäß durch die Merkmale des Anspruchs 1 gelöst. Der erfindungsgemäße Spreizdübel weist im Bereich seiner Spreizzungen eine größere Querabmessung als das Bohrloch, in welchem er zu verankern ist, auf. Beim Einführen des Spreizdübels in das Bohrloch werden die Spreizzungen radial zueinander gedrückt, so daß sich Zwischenräume zwischen den Spreizzungen verengen oder schließen. Dies ergibt eine großflächige Anlage des Spreizdübels auf der gesamten oder zumindest nahezu der gesamten Umfangsfläche der Bohrlochwand. Diese gegenüber bekannten Spreizdübeln vergrößerte Anlagefläche verbessert den Halt des erfindungsgemäßen Spreizdübels im Bohrloch und vergrößert seine Verankerungskraft.

Die Zwischenräume zwischen den Spreizzungen sind vorzugsweise so groß bemessen, daß sie sich zumindest am Umfang des Spreizdübels vollständig oder nahezu vollständig schließen, wenn der Spreizdübel in das Bohrloch eingeführt wird. Dadurch wird im Spreizbereich des Spreizdübels eine im wesentlichen geschlossene Umfangsfläche ohne Unterbrechungen zwischen den Spreizzungen und damit die größtmögliche Anlagefläche an der Bohrlochwand bei gegebenem Bohrlochdurchmesser erreicht.

In bevorzugter Ausgestaltung weist der erfindungsgemäße Spreizdübel zwei mit Abstand voneinander und einander gegenüber angeordnete Spreizzungen mit im wesentlichen kreissegmentförmigen Querschnitt auf. Zwischen diesen beiden Spreizzungen sind zwei weitere Spreizzungen angeordnet, die in einer Mitte des Spreizdübels etwas Abstand voneinander aufweisen und radial bis zum Außenumfang reichen. Der Spreizdübel weist im Bereich seiner Spreizzungen eine zylindrische, an den Zwischenräumen zwischen Spreizzungen unterbrochene, zylindrische Mantelfläche auf, deren Durchmesser größer als ein Durchmesser des Bohrlochs ist, in das der Spreizdübel einzusetzen ist. Diese Ausbildung des Spreizdübels ermöglicht es, die Spreizzungen beim Einführen in das Bohrloch so in radialer Richtung zusammenzudrücken, daß sich die Unterbrechungen der Mantelfläche schließen.

Bei einer Weiterbildung der Erfindung haben die zwischen den kreissegmentförmigen Querschnitt aufweisenden Spreizzungen befindlichen Spreizzungen einen U-förmigen Querschnitt, wobei sich eine Jochwand am Umfang des Spreizdübels befindet und dem Durchmesser des Bohrlochs angepaßt gerundet ist. Schenkelwände der im Querschnitt U-förmigen Spreizzungen verlaufen ins Innere des Dübels. Ihre freien Enden haben Abstand voneinander und bilden eine Längsführung für die einzudrehende Schraube. Diese Ausgestaltung der Erfindung hat neben der guten Längsführung der Schraube den Vorteil, daß die beiden Spreizschenkel mit U-förmigem Querschnitt von der eingedrehten Schraube in radialer Richtung auseinander gedrückt werden. Zugleich werden die Schenkelwände dieser Spreizzungen in einer radialen Richtung senkrecht zu der Richtung, in die diese beiden Spreizzungen auseinander gedrückt werden, auseinandergespreizt. Die Schenkelwände drücken dadurch die beiden anderen, kreissegmentförmigen Querschnitt aufweisenden Spreizzungen ebenfalls in radialer Richtung zum Spreizdübel und senkrecht zu den U-förmigen Querschnitt aufweisenden Spreizzungen auseinander. Durch die radiale Aufspreizung aller vier Spreizzungen wird eine wirkungsvolle Anlage im Bohrloch erreicht, die eine hohe Verankerungskraft ergibt. Ein Einschraubmoment der Schraube in den erfindungsgemäßen Spreizdübel wird mit hohem Wirkungsgrad in eine Aufspreizung des Spreizdübels umgesetzt.

Vorzugsweise weist der erfindungsgemäße Spreizdübel drei, insbesondere vier oder mehr Spreizzungen auf. Dadurch wird vermieden, daß der Spreizdübel eine Vorzugsrichtung wie ein Spreizdübel mit lediglich zwei Spreizzungen aufweist, der senkrecht zu einer Trennebene zwischen seinen beiden Spreizzungen, also in der Richtung, in der seine Spreizzungen auseinandergespreizt werden, höhere Querkräfte aufzunehmen in der Lage ist als in der Trennebene. Weiterer Vorteil der größeren Spreizzungenzahl ist die bessere Verteilung der Spreizkräfte über den gesamten Umfang des Bohrlochs, in welchem der Spreizdübel verankert wird. Dies erhöht die Verankerungskraft des Spreizdübels im Bohrloch. Hinzu kommt der Vorteil, daß die gleichmäßigere Beaufschlagung der Bohrlochwandung lokal hohe Belastungen der Bohrlochwandung verringert und dadurch ein örtliches Nachgeben der Bohrlochwandung durch örtliche Verformung oder Zerstörung des Mauerwerks, in dem das Bohrloch angebracht ist, vermeidet. Dies verbessert die Verankerung des Spreizdübels insbesondere in weichem oder porösem Mauerwerk.

Ebenfalls einer gleichmäßigen Beaufschlagung der Bohrlochwandung über den gesamten Umfang dient die Ausbildung des erfindungsgemäßen Spreizdübels mit Spreizzungen, deren Querschnittsflächen in etwa gleichen Flächeninhalt aufweisen. Solche gleich großen Querschnittsflächen der Spreizzungen bewirken eine näherungsweise gleich starke Verformung der Spreizzungen, die beim Aufspreizen des Spreizdübels zwischen der sie auseinanderspreizenden Schraube und der Bohrlochwand gequetscht werden. Die näherungsweise gleich große Verformung führt zu näherungsweise gleich großen Andruckkräften der Spreizzungen gegen die Bohrlochwand.

Zur Verbesserung der Verankerung des Spreizdübels im Bohrloch ist bei Ausgestaltungen der Erfindung vorgesehen, daß mindestens eine der Spreizzungen ein, vorzugsweise zwei einander entgegengesetzt in etwa tangential bzw. in etwa in Umfangsrichtung abstehende Flügelelemente aufweist. Derartige Flügelelemente erhöhen die Elastizität der Spreizzunge und bewirken eine Vergrößerung der Anlagefläche.

Bei einer Ausgestaltung der Erfindung sind Spreizzungen mit in etwa kreissegmentförmigen Querschnitten vorgesehen. Dies hat den Vorteil, daß sich alle Spreizzungen mit gleichem Querschnitt ausbilden lassen. Es werden dadurch gleiche Aufspreizkräfte aller Spreizzungen erzielt.

In bevorzugter Ausgestaltung sind die Spreizzungen an ihren beiden Enden miteinander verbunden. Dies verbessert eine Torsionssteifigkeit des Spreizdübels und verhindert, daß sich der Spreizdübel beim Eindrehen der Schraube um seine Längsachse verwindet. Des weiteren wird vermieden, daß eine oder mehrere Spreizzungen von der Schraube in tangentialer Richtung im Bohrloch beiseite gedrückt werden, so daß Schraube und Spreizzunge nebeneinander zu liegen kommen.

Um die Schraube zuverlässig zwischen den Spreizzungen in Längsrichtung des Spreizdübels zu führen, ist bei Ausgestaltungen der Erfindung vorgesehen, die Spreizzungen mit in Längsrichtung verlaufenden Führungsrillen an ihren einander zugewandten Innenseiten auszubilden, deren Randkanten die Schraube führen.

Die Zwischenräume zwischen den Spreizzungen bilden vorzugsweise in zueinander parallel liegenden Ebenen befindliche Schlitze. Diese Schlitze lassen sich beim Spritzgießen durch zueinander parallel in einen Formhohlraum stehende Rippen formen, so daß der fertige Spritzdübel problemlos aus einem Spritzwerkzeug entnommen werden kann. Der erfindungsgemäße Spreizdübel läßt sich dadurch mit einem einfachen Spritzwerkzeug herstellen, das zwei übereinstimmende, spiegelbildlich angeordnete Werkzeughälften mit im wesentlichen halbzylindrischen Ausnehmungen, in die die Rippen zur Formung der Schlitze zwischen den Spreizzungen des Spreizdübels vorstehen, sowie einen Kern, aufweist. Um den Spreizdübel besser aus dem Spritzwerkzeug entnehmen zu können, können sich die Schlitze zum Umfang des Spreizdübels hin erweitern.

Die Spreizzungen des erfindungsgemäßen Spreizdübels können über ihre gesamte Länge voneinander getrennt und nur an einem oder an beiden Enden miteinander verbunden sein. Bei dieser Ausgestaltung der Erfindung lassen sich die Spreizzungen mit minimaler Kraft aufspreizen, wodurch das Einschraubmoment der Schraube klein ist. Bei einer anderen Ausgestaltung der Erfindung sind einander benachbarte Spreizzungen an einzelnen Stellen ihrer Länge oder durchgehend elastisch miteinander verbunden. Bei dieser Ausgestaltung der Erfindung ist die Längsführung der einzudrehenden Schraube verbessert.

Die Erfindung wird nachfolgend anhand zweier in der Zeichnung dargestellter Ausführungsbeispiele näher erläutert. Es zeigen:
- Figur 1: eine perspektivische Darstellung eines erfindungsgemäßen Spreizdübels;
- Figur 2: den Spreizdübel aus Figur 1 im Halbschnitt in vergrößerter Darstellung;
- Figur 3: einen Querschnitt entlang der Linie III-III in Figur 2 in vergrößerter Darstellung;
- Figur 4: den Querschnitt gemäß Figur 3 bei in ein Bohrloch eingesetztem Spreizdübel;
- Figur 5: einen Querschnitt gemäß Figur 3 einer zweiten Ausführungsform der Erfindung;
- Figur 6: den Querschnitt gemäß Figur 5 bei in ein Bohrloch eingesetztem Spreizdübel;
- Figur 7: einen Achsschnitt einer dritten Ausführungsform eines erfindungsgemäßen Speizdübels;
- Figur 8: einen Querschnitt entlang Linie VIII-VIII in Figur 7; und
- Figur 9: einen Querschnitt entlang Linie IX-IX in Figur 7.

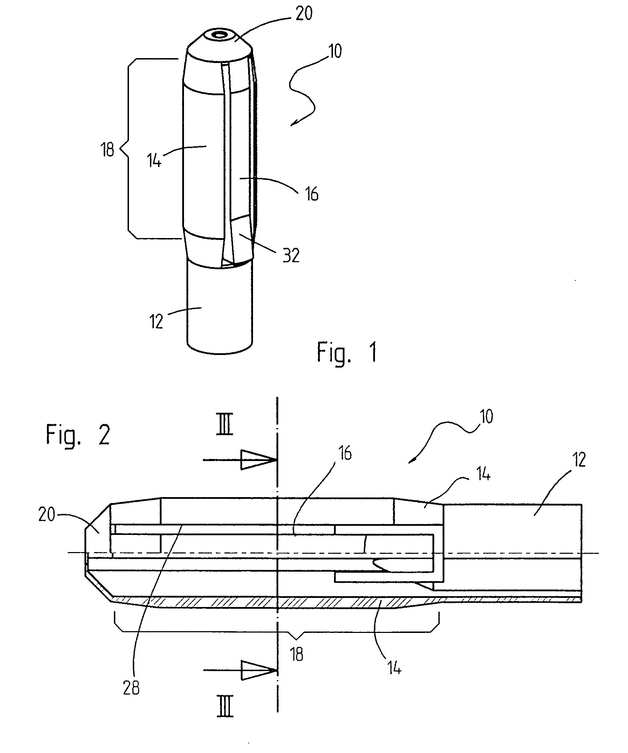

Der in Figuren 1, 2 und 3 in seinem Grundzustand dargestellte, erfindungsgemäße Spreizdübel 10 ist als Spritzgießteil einstückig aus Kunststoff, insbesondere aus Polyamid hergestellt. Er weist eine rohrförmige Einführhülse 12 an einem hinteren Ende auf, von der aus sich vier Spreizzungen 14, 16 über einen Spreizbereich 18 bis an ein vorderes Ende 20 des Spreizdübels erstrecken.

Zwei mit Abstand einander gegenüberliegende Spreizzungen 14 weisen kreissegmentförmigen Querschnitt auf. Die beiden anderen Spreizzungen 16 sind einander ebenfalls gegenüberliegend in einem Zwischenraum zwischen den kreissegmentförmigen Querschnitt aufweisenden Spreizzungen 14 angeordnet. Diese Spreizzungen 16 haben U-förmigen Querschnitt und weisen etwas Abstand voneinander auf. Jochwände 22 der im Querschnitt U-förmigen Spreizschenkel 16 befinden sich am Umfang des Spreizdübels 10, während ihre Schenkelwände 24 in das Innere des Spreizdübels 10 ragen. Die Jochwände 22 der Spreizzungen 16 sind gerundet. Zwischen den Schenkelwänden 24 der Spreizzungen 16 U-förmigen Querschnitts und Grundseiten 26 der Spreizzungen 14 kreissegmentförmigen Querschnitts ist Abstand in Form durchgehender Schlitze 28 vorhanden. Die vier Spreizschenkel 14, 16 sind gegeneinander beweglich und lassen sich in jeweils radialer Richtung nach außen und nach innen drücken. Die Spreizschenkel 14, 16 begrenzen einen sich über den Spreizbereich 18 des Spreizdübels 10 erstreckenden Innenraum 30 mit kreuzförmigem Querschnitt zwischen sich.

Am Außenumfang bilden die Spreizzungen 14, 16 eine zylindrische, an den Schlitzen 28 unterbrochene Mantelfläche, deren Durchmesser größer als ein Außendurchmesser der Einführhülse 12 ist. Der Außendurchmesser der Einführhülse 12 entspricht einem Nenndurchmesser des Spreizdübels 10 und damit einem Durchmesser eines Bohrlochs, das zum Einsetzen des Spreizdübels 10 vorgesehen ist.

Rückwärtige Enden der Spreizzungen 16 mit U-förmigem Querschnitt sind als schräg nach außen auslaufende Sperrklinken 32 ausgebildet (Figur 1), die dem Spreizdübel 10 zusätzlichen Halt im Bohrloch geben. An ihren rückwärtigen Enden sind die Spreizzungen 16 U-förmigen Querschnitts nicht mit der Einführhülse 12 verbunden. Sie sind am vorderen Ende 20 des Spreizdübels 10 mit den Spreizzungen 14 kreissegmentförmigen Querschnitts einstückig verbunden. Die Spreizzungen 14 kreissegmentförmigen Querschnitts sind an ihrem rückwärtigen Ende einstückig mit der Einführhülse 12, so daß die Spreizzungen 16 U-förmigen Querschnitts über die Spreizzungen 14 kreissegmentförmigen Querschnitts einstückig mit der Einführhülse 12 sind.

Beim Einführen des erfindungsgemäßen Spreizdübels 10 in ein Bohrloch 34 beispielsweise in einem Mauerwerg 36 aus Beton werden die vier Spreizzungen 14, 16 radial nach innen und aufeinander zu gedrückt (Figur 4). Dabei schließen sich die Schlitze 28 zwischen den Spreizzungen 14 kreissegmentförmigen Querschnitts und den zwischen ihnen einliegenden Spreizzungen 16 mit nach innen offenem, U-förmigem Querschnitt weitgehend. Der Spreizdübel 10 liegt dadurch in seinem Spreizbereich 18 bis auf kleine Unterbrechungen an den Schlitzen 28 vollflächig an einer Umfangswand des Bohrlochs 34 an. Der erfindungsgemäße Spreizdübel 10 hat dadurch bei gegebenem Bohrlochdurchmesser die größtmögliche Anlagefläche, was eine große Verankerungskraft im Mauerwerk 36 ergibt.

Zur Verankerung wird eine nicht dargestellte Schraube durch die Einführhülse 12 in den Spreizdübel 10 eingeführt und zwischen die Spreizzungen 14,16 eingeschraubt. Beim Einschrauben geben die einander zugewandten, freien Enden der Schenkelwände 24 der Spreizzungen 16 U-förmigen Querschnitts eine gute, mit einer gedachten Längsachse des Spreizdübels 10 fluchtende Längsführung an vier über den Umfang eines Schraubengewindes der einzudrehenden Schraube verteilten Punkten. Die Schraube drückt die beiden Spreizschenkel 16 U-förmigen Querschnitts in radialer Richtung nach außen gegen die Umfangswand des Bohrlochs 34. Zugleich werden die freien Enden der Schenkelwände 24 auseinandergespreizt und gegen die Grundseiten 26 der Spreizzungen 14 kreissegmentförmigen Querschnitts gedrückt. Auf diese Weise werden die Spreizzungen 14 kreissegmentförmigen Querschnitts in radialer Richtung und somit quer zu den Spreizzungen 16 U-förmigen Querschnitts, auseinander und gegen die Umfangswand des Bohrlochs 34 gedrückt. Die nur am vorderen Ende 20 miteinander verbundenen und über ihre gesamte Länge voneinander getrennten Spreizzungen 14, 16 setzen dem Eindrehen der Schraube kaum Widerstand entgegen, so daß ein Eindrehmoment der Schraube mit hohem Wirkungsgrad in eine Aufspreizung der Spreizschenkel 14, 16 gegen die Umfangswand des Bohrlochs 34 umgesetzt wird.

Bei unverformten Spreizdübel 10 sind die Schlitze 28 zwischen den Spreizzungen 14 kreissegmentförmigen Querschnitts und den Spreizzungen U-förmigen Querschnitts verhältnismäßig breit in Bezug auf den Durchmesser des Spreizdübels. Dies ist spritztechnisch günstig, da sich die Schlitze 28 mit Rippen eines Spritzgießwerkzeugs herstellen lassen, die aufgrund ihrer Dicke ausreichende Stabilität aufweisen, um den beim Spritzgießen auftretenden Belastungen ohne sich zu verformen widerstehen.

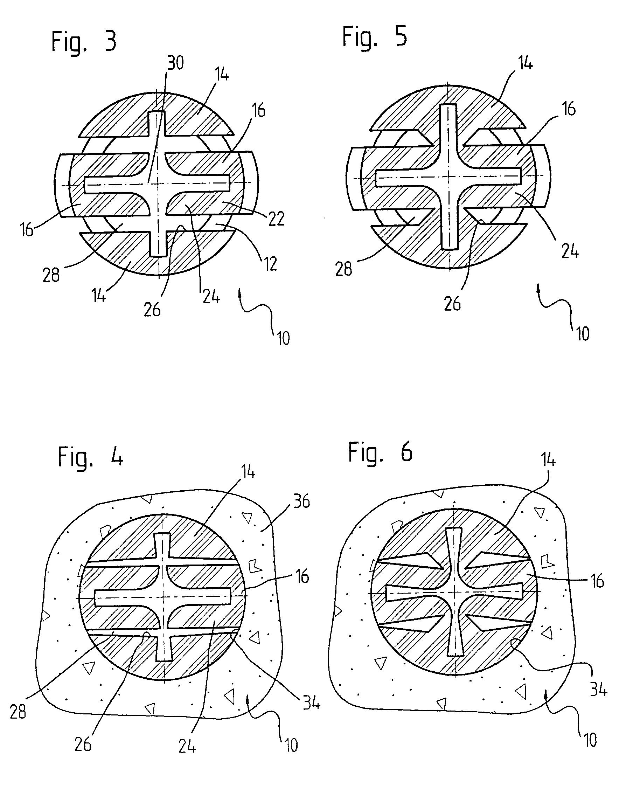

Figur 5 zeigt einen Querschnitt gemäß Figur 3 einer zweiten Ausführungsform eines erfindungsgemäßen Spreizdübels 10. Bei dieser Ausführungsform der Erfindung sind einander benachbarte Spreizzungen 14, 16 über ihre Länge elastisch miteinander verbunden. Die Schenkelwände 24 der Spreizzungen 16 U-förmigen Querschnitts gehen an ihren inneren Enden einstückig in einen Mittelbereich der Grundseiten 26 der Spreizzungen 14 kreissegmentförmigen Querschnitts über. Die Schlitze 28 zwischen den Spreizzungen 14 kreissegmentförmigen Querschnitts und den Spreizzungen 16 U-förmigen Querschnitts sind nicht durchgehend ausgebildet, sie enden im Innern des Spreizdübels 10. Diese Ausgestaltung des erfindungsgemäßen Spreizdübels 10 verbessert die Längsführung einer Schraube beim Eindrehen. Im übrigen stimmt der in Figur 5 dargestellte Spreizdübel 10 mit dem in Figur 3 dargestellten Spreizdübel 10 überein. Für gleiche Teile werden gleiche Bezugszeichen verwendet und es wird insoweit auf vorstehende Ausführungen zu Figuren 1 bis 4 verwiesen.

Figur 6 zeigt den Querschnitt aus Figur 5 bei in ein Bohrloch 34 eingesetztem Spreizdübel 10. Die Schlitze 28 zwischen den Spreizzungen 14, 16 sind an ihren äußeren Enden vollständig geschlossen, so daß die Spreizzungen 14, 16 ohne Unterbrechung an der Umfangswand des Bohrlochs 34 anliegen.

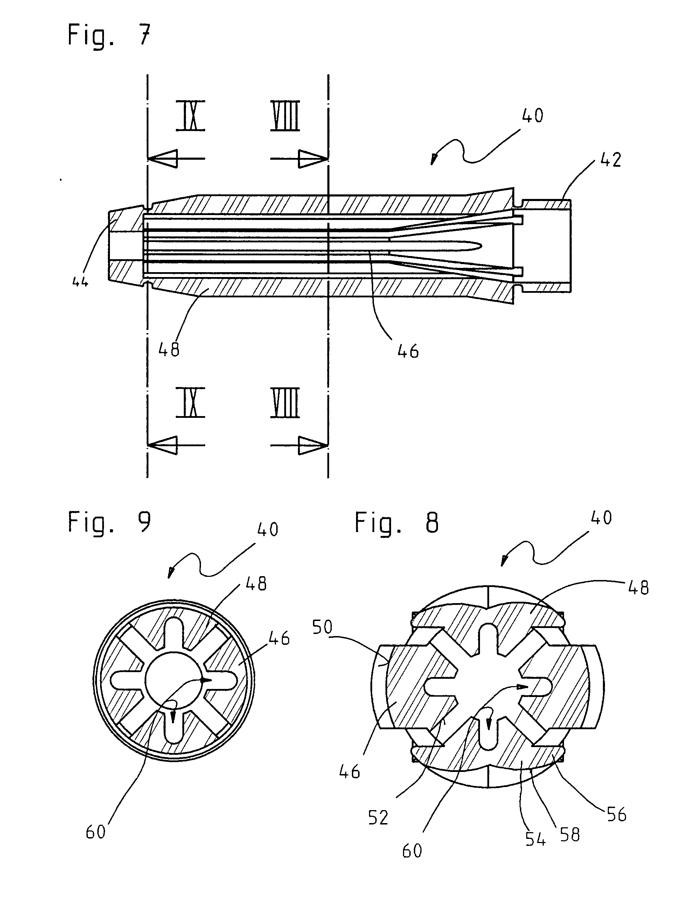

Der in Figuren 7 bis 9 in seinem unverformten Grundzustand dargestellte, erfindungsgemäße Spreizdübel 40 weist eine rohrförmige Einführhülse 42 an einem hinteren Ende und eine rohrförmige Hülse 44 an einem vorderen Ende auf, zwischen denen sich vier Spreizzungen 46, 48 erstrecken. Alle vier Spreizzungen 46, 48 gehen an ihren Enden einstückig in die Einführhülse 42 und in die Hülse 44 am vorderen Ende des Spreizdübels 40 über. Die Spreizzungen 46, 48 sind dadurch an ihren beiden Enden einstückig miteinander verbunden.

Die Spreizzungen 46, 48 weisen über einen Großteil ihrer Länge die in Figur 8 dargestellten Querschnitte auf: zwei einander gegenüberliegende Spreizzungen 46 haben einen näherungsweise rechteckförmigen Querschnitt. Außenflächen 50 dieser Spreizzungen 46 weisen eine Wölbung auf, die einer Krümmung einer Bohrlochwandung entspricht, in die der Spreizdübel 40 eingesetzt wird. Einander zugewandte Innenseiten 52 der rechteckförmigen Spreizzungen 46 sind im Querschnitt dreiecksförmig angeschrägt.

Die beiden anderen, einander ebenfalls gegenüberliegenden Spreizzungen 48 haben einen in Längsrichtung verlaufenden, im Querschnitt dreiecksförmigen Steg 54, von dem in tangentialer Richtung zu beiden Seiten Flügelelemente 56 abstehen. Die Flügelelemente 56 sind einstückig mit dem Steg 54, sie erstrecken sich im wesentlichen über die gesamte Länge der Spreizzungen 48.

Die Flügelelemente 56 haben gewölbte Außenflächen 58. Die Flügelelemente 56 vergrößern die Außenfläche der Spreizzungen 48 und damit die Anlagefläche des Spreizdübels 40 im Bohrloch. Aufgrund ihrer Elastizität passen sich die Flügelelemente 56 beim Aufspreizen an die Bohrlochwandung an.

An ihren einander zugewandten Innenseiten weisen alle vier Spreizzungen 46, 48 in Längsrichtung verlaufende Führungsrillen 60 auf, die eine nicht dargestellte Schraube, die zum Aufspreizen des Spreizdübels 40 durch die Einführhülse 42 zwischen dessen Spreizzungen 46, 48 eingeschraubt wird, in Achsrichtung des Spreizdübels 40 führen.

In Richtung des vorderen Endes des Spreizdübels 40 ändern die Spreizzungen 46, 48 ihre Querschnitte, wie in Figur 9 dargestellt: im Bereich des vorderen Endes weisen alle vier Spreizzungen 46, 48 übereinstimmend einen kreissegmentförmigen Querschnitt auf. Die Führungsrillen 60 setzen sich über die gesamte Länge der Spreizzungen 46, 48 bis zur Hülse 44 am vorderen Ende des Spreizdübels 40 fort. Die Querschnitte der Spreizzungen 46, 48 (dies gilt ebenfalls für die Spreizzungen 14, 16 des in Figuren 1 bis 6 dargestellten Spreizdübels 10) können sich also über ihre Länge ändern oder aber einen über ihre gesamte Länge gleichbleibenden Querschnitt aufweisen.

Die Querschnittsfläche der Spreizzungen 46, 48 des in Figur 8 dargestellten Querschnitts sind näherungsweise gleich groß.

## Patentansprüche

1. Spreizdübel (10, 40) mit sich über einen Spreizbereich (18) erstreckenden Spreizzungen (14, 16, 46, 48), die durch Eindrehen einer Schraube radial auseinanderspreizbar sind, **dadurch gekennzeichnet,** daß der Spreizdübel (10, 40) im Spreizbereich (18) Übermaß und daß der Spreizdübel (10, 40) Zwischenräume (28, 30) zwischen den Spreizzungen (14, 16, 46, 48) aufweist, die ein radiales Zusammendrücken des Spreizdübels (10, 40) auf ein Nennmaß ermöglichen, wobei sich die Zwischenräume (28, 30) zwischen den Spreizzungen (14, 16, 46, 48) verengen oder schließen.

2. Spreizdübel nach Anspruch 1, **dadurch gekennzeichnet,** daß der Spreizdübel (10) zwei einander mit Abstand gegenüber angeordnete Spreizzungen (14) mit im wesentlichen kreissegmentförmigem Querschnitt aufweist, zwischen denen zwei Spreizzungen (16) einliegen, deren Querschnitt einen näherungsweise rechteckigen Umriß aufweist.

3. Spreizdübel nach Anspruch 2, **dadurch gekennzeichnet,** daß die Spreizzungen (16), deren Querschnitt einen näherungsweise rechteckigen Umriß aufweist, einen zu einer Mitte des Spreizdübels (10) offenen, U-förmigen Querschnitt aufweisen.

4. Spreizdübel nach Anspruch 1, **dadurch gekennzeichnet**, daß der Spreizdübel (10; 40) mindestens drei Spreizzungen (14, 16; 46, 48) aufweist.

5. Spreizdübel nach Anspruch 1, **dadurch gekennzeichnet**, daß die Spreizzungen (46, 48) in etwa gleich große Querschnittsflächen aufweisen.

6. Spreizdübel nach Anspruch 1, **dadurch gekennzeichnet,** daß mindestens eine der Spreizzungen (48) ein in etwa tangential bzw. in etwa in Umfangsrichtung abstehendes Flügelelement (56) aufweist.

7. Spreizdübel nach Anspruch 1, **dadurch gekennzeichnet,** daß die Spreizzungen (46, 48) in etwa kreissegmentförmige Querschnitte aufweisen.

8. Spreizdübel nach Anspruch 1, **dadurch gekennzeichnet,** daß die Spreizzungen (46, 48) an ihren beiden Enden miteinander verbunden sind.

9. Spreizdübel nach Anspruch 1, **dadurch gekennzeichnet,** daß die Spreizzungen (46, 48) in Längsrichtung verlaufende Führungsrillen (60) zur Führung der zum Aufspreizen des Spreizdübels (40) in den Spreizdübel (40) eindrehbaren Schraube aufweisen.

10. Spreizdübel nach Anspruch 1, **dadurch gekennzeichnet,** daß die Zwischenräume zwischen den Spreizzungen (14, 16, 46, 48) zueinander parallele Schlitze (28) bilden.

11. Spreizdübel nach Anspruch 1, **dadurch gekennzeichnet,** daß die Spreizzungen (14, 16, 46, 48) über ihre gesamte Länge voneinander getrennt sind.

12. Spreizdübel nach Anspruch 1, **dadurch gekennzeichnet**, daß einander benachbarte Spreizzungen (14, 16) im Bereich ihrer Längserstreckung elastisch miteinander verbunden sind.

## Claims

1. Expansible plug (10, 40) having expansible tongues (14, 16, 46, 48) that extend over an expansible region (18) and that can be expanded away from one another radially by screwing in a screw, characterised in that the expansible plug (10, 40) is over-sized in the expansible region (18) and the expansible plug (10, 40) has spaces (28, 30) between the expansible tongues (14, 16, 46, 48) that enable the expansible plug (10, 40) to be radially compressed to a nominal dimension, with the spaces (28, 30) between the expansible tongues (14, 16, 46, 48) being narrowed or closed.

2. Expansible plug according to claim 1, characterised in that the expansible plug (10) has two expansible tongues (14), arranged opposite to and spaced from one another, that are, in cross-section, substantially in the shape of a segment of a circle, between which expansible tongues there lie two expansible tongues (16), the cross-section of which is of approximately rectangular outline.

3. Expansible plug according to claim 2, characterised in that the expansible tongues (16), the cross-section of which is of approximately rectangular outline, are of a U-shaped cross-section open to the centre of the expansible plug (10).

4. Expansible plug according to claim 1, characterised in that the expansible plug (10; 40) has at least three expansible tongues (14, 16; 46, 48).

5. Expansible plug according to claim 1, characterised in that the cross-sectional areas of the expansible tongues (46, 48) are of approximately the same size.

6. Expansible plug according to claim 1, characterised in that at least one of the expansible tongues (48) has wing elements (56) that project in an approximately tangential direction or in an approximately circumferential direction.

7. Expansible plug according to claim 1, characterised in that the expansible tongues (46, 48) are of approximately circle segment-shaped cross-section.

8. Expansible plug according to claim 1, characterised in that the expansible tongues (46, 48) are connected to one another at both ends.

9. Expansible plug according to claim 1, characterised in that the expansible tongues (46, 48) have guide grooves (60) that run in the longitudinal direction for guiding the screw that is to be screwed into the expansible plug (40) in order to expand the expansible plug (40).

10. Expansible plug according to claim 1, characterised in that the spaces between the expansible tongues (14, 16, 46, 48) form slits (28) that are parallel with one another.

11. Expansible plug according to claim 1, characterised in that the expansible tongues (14, 16, 46, 48) are separated from one another over their entire length.

12. Expansible plug according to claim 1, characterised in that expansible tongues (14, 16) that are adjacent to one another are connected to one another resiliently within their longitudinal extent.

## Revendications

1. Cheville à expansion (10, 40) comprenant des languettes expansibles (14, 16, 46, 48) s'étendant sur une zone expansible (18), qui peuvent se déployer radialement en vissant une vis, caractérisée en ce que la cheville à expansion (10, 40) est surdimensionnée dans la zone expansible (18), et en ce que la cheville à expansion (10, 40) présente des intervalles (28, 30) entre les languettes expansibles (14, 16, 46, 48), qui permettent une compression radiale de la cheville à expansion (10, 40) pour lui donner une valeur nominale, à l'occasion de quoi les intervalles (28, 30) entre les languettes expansibles (14, 16, 46, 48) se rétrécissent ou se ferment.

2. Cheville à expansion selon la revendication 1, caractérisée en ce que la cheville à expansion (10) présente deux languettes expansibles (14) de section transversale essentiellement en arc de cercle qui sont disposées face à face avec un écart, entre lesquelles se trouvent deux languettes expansibles (16) dont la section transversale présente un contour approximativement rectangulaire.

3. Cheville à expansion selon la revendication 2, caractérisée en ce que les languettes expansibles (16) dont la section transversale a un contour approximativement rectangulaire présentent une section transversale en U ouverte vers un milieu de la cheville à expansion (10).

4. Cheville à expansion selon la revendication 1, caractérisée en ce que la cheville à expansion (10, 40) présente quatre languettes expansibles (14, 16 ; 46, 48).

5. Cheville à expansion selon la revendication 1, caractérisée en ce que les languettes expansibles (46, 48) présentent des sections transversales dont les superficies sont approximativement identiques.

6. Cheville à expansion selon la revendication 1, caractérisée en ce qu'au moins l'une des languettes expansibles (48) présente une aile (56) faisant saillie approximativement de façon tangentielle ou approximativement en direction du pourtour.

7. Cheville à expansion selon la revendication 1, caractérisée en ce que les languettes expansibles (46, 48) présentent des sections à peu près en forme d'arc de cercle.

8. Cheville à expansion selon la revendication 1, caractérisée en ce que les languettes expansibles (46, 48) sont reliées entre elles par leurs deux extrémités.

9. Cheville à expansion selon la revendication 1, caractérisée en ce que les languettes expansibles (46, 48) comportent des nervures de guidage (60) s'étendant longitudinalement pour guider la vis pouvant être vissée dans la cheville à expansion (40) afin de déployer la cheville à expansion (40).

10. Cheville à expansion selon la revendication 1, caractérisée en ce que les intervalles entre les languettes expansibles (14, 16, 46, 48) forment des fentes (28) parallèles entre elles.

11. Cheville à expansion selon la revendication 1, caractérisée en ce que les languettes expansibles (14, 16, 46, 48) sont séparées les unes des autres sur toute leur longueur.

12. Cheville à expansion selon la revendication 1, caractérisée en ce que des languettes expansibles (14, 16) contiguës sont reliées entre elles de manière élastique dans la zone de leur étendue longitudinale.
